(19) Europäisches Patentamt
European Patent Office
Office européen des brevets

(11) **EP 4 228 075 A2**

(12) **EUROPEAN PATENT APPLICATION**

(43) Date of publication:
**16.08.2023   Bulletin 2023/33**

(21) Application number: **23155624.2**

(22) Date of filing: **08.02.2023**

(51) International Patent Classification (IPC):
*H01M 50/449* (2021.01)       *H01M 10/0525* (2010.01)
*H01M 50/403* (2021.01)       *H01M 50/414* (2021.01)
*H01M 50/46* (2021.01)         *H01M 50/491* (2021.01)

(52) Cooperative Patent Classification (CPC):
**H01M 50/449; H01M 10/0525; H01M 50/403;
H01M 50/414; H01M 50/46; H01M 50/491**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.02.2022   JP 2022021026**

(71) Applicant: **TOYOTA JIDOSHA KABUSHIKI
KAISHA**
**Aichi-Ken 471-8571 (JP)**

(72) Inventors:
• **MASAOKA, Sota**
  **Toyota-shi, 471-8571 (JP)**
• **MATSUNOBU, Kohei**
  **Toyota-shi, 471-8571 (JP)**

(74) Representative: **D Young & Co LLP**
  **120 Holborn**
  **London EC1N 2DY (GB)**

(54) **POLYMER POROUS FILM, SEPARATOR FOR BATTERY, ELECTRODE UNIT, ELECTRODE FRAMEWORK, BATTERY, AND METHOD OF PRODUCING POLYMER POROUS FILM**

(57)    A polymer porous film includes a first layer and a second layer. The first layer is porous. The first layer has a three-dimensional network structure. The second layer is non-porous in an image at a magnification of 50,000x. A proportion of the second layer is more than 0% and less than 10%. The proportion of the second layer is calculated by the following expression: "proportion (%) of the second layer = $(t_2/t_0) \times 100$". $t_0$ represents a thickness of the polymer porous film. $t_2$ represents a thickness of the second layer.

FIG.1

EP 4 228 075 A2

## Description

This nonprovisional application is based on Japanese Patent Application No. 2022-021026 filed on February 15, 2022, with the Japan Patent Office, the entire contents of which are hereby incorporated by reference.

BACKGROUND

Field

The present disclosure relates to a polymer porous film, a separator for a battery, an electrode unit, an electrode framework, a battery, and a method of producing a polymer porous film.

Description of the Background Art

Japanese Patent Laying-Open No. 2020-123453 discloses forming a separator layer by phase separation.

SUMMARY

Forming a polymer porous film by phase separation that is induced during the drying process of multi-component solution (hereinafter also called "drying-induced phase separation") has been suggested. Such a polymer porous film may be used as a separator for a battery, for example. Hereinafter, a polymer porous film may also be simply called "a porous film".

A multi-component solution includes a polymer material, a good solvent, and a poor solvent. While the solution is drying, the solvent vaporizes from the surface of the solution. This may bring about a difference in composition between the surface layer of the solution and the bulk of the solution. As a result, the resulting porous film may include a first layer and a second layer. The first layer is a base layer of the porous film. The first layer may have a three-dimensional network structure. The second layer may be formed as the outermost surface of the porous film. The second layer is non-porous. In the second layer, no pores can be observed in an SEM (Scanning Electron Microscope) image at a magnification of 50,000x.

Inside a battery, the second layer (a non-porous layer) may inhibit permeation of ions. That is, when the porous film includes the second layer, the porous film may not necessarily function as a separator.

An object of the present disclosure is to provide a novel polymer porous film.

Hereinafter, the technical configuration and effects of the present disclosure will be described. It should be noted that the action mechanism according to the present specification includes presumption. The action mechanism does not limit the technical scope of the present disclosure.

1. A polymer porous film comprises a first layer and a second layer. The first layer is porous. The first layer has a three-dimensional network structure. The second layer is non-porous in an image at a magnification of 50,000x. A proportion of the second layer is more than 0% and less than 10%.

The proportion of the second layer is calculated by the following expression (I).

$$\text{Proportion (\%) of the second layer} = (t_2/t_0) \times 100 \qquad \text{(I)}$$

"$t_0$" represents a thickness of the polymer porous film.

"$t_2$" represents a thickness of the second layer.

According to a novel finding of the present disclosure, when the proportion of the second layer (a non-porous layer) in the entire film is less than 10%, the second layer exhibits ion permeability. That is, the porous film including the second layer in a proportion of less than 10% may function as a separator. Further, the present disclosure has also revealed that the presence of the second layer brings about advantages. More specifically, it is expected that the presence of the second layer may enhance the short circuit resistance of the battery. It may be because the second layer may inhibit dendrite growth.

2. The ratio of the second layer may be from 2 to 8%, for example.

3. The thickness of the second layer may be from 0.5 to 1.5 $\mu$m, for example.

4. The first layer may have an average pore size from 500 to 2000 nm, for example.

5. The three-dimensional network structure may include a continuous pore structure, for example.

The three-dimensional network structure may be formed by partial overlapping of foam-like pores, for example.

6. The polymer porous film may include at least one selected from the group consisting of ethylene-vinyl alcohol copolymer (EVOH), polyvinylidene difluoride (PVDF), and polyvinyl alcohol (PVA), for example.

The raw material of the porous film may be either a water-insoluble polymer or a water-soluble polymer.

7. The polymer porous film may have an air permeability from 32 to 600 s/100ml, for example.

8. The polymer porous film may have a porosity from 50 to 72%, for example.

9. The polymer porous film may have a thickness from 16 to 25 $\mu$m, for example.

10. A separator for a battery comprises the polymer porous film.

The porous film may be used as a separator for a battery, for example. Hereinafter, "a separator for a battery" may also be simply called "a separator".

11. An electrode unit comprises the polymer porous film and an electrode. The polymer porous film is adhered to a surface of the electrode.

The porous film may be used in an electrode unit, for example. The electrode unit is a single-piece member composed of a separator and an electrode.

12. An electrode framework comprises the polymer porous film.

13. A battery comprises a first electrode, a separator, a second electrode, and an electrolyte solution. The second electrode has a polarity that is different from a polarity of the first electrode. The separator separates the second electrode from the first electrode. The separator includes the polymer porous film.

The battery according to the above "13." may include at least one of the separator according to the above "10." and the electrode unit according to the above "11.".

14. A battery comprises a first electrode, a second electrode, and an electrolyte solution. The second electrode has a polarity that is different from a polarity of the first electrode. The second electrode includes the electrode framework. The second electrode is charged by deposition reaction of a metal inside a space in the first layer, and discharged by dissolution reaction of the metal inside the space in the first layer.

The present disclosure also provides novel uses of the porous film. The electrode framework provides a reaction field for an active material (a metal) inside a battery of the dissolution-deposition type. The metal may be dissolved and deposited in a space in the electrode framework (the first layer). A battery of the dissolution-deposition type is expected to have a high capacity. Conventionally, a battery of the dissolution-deposition type has a problem with dendrites. More specifically, metal dendrites can grow to cause an internal short circuit. For example, if metal deposits within a pore (a foam-like pore) in the first layer, the metal is expected to form lumps, not dendrites. In addition, volume change of the electrode due to metal dissolution and deposition is expected to be reduced. Furthermore, the presence of the second layer is expected to cause the metal to be entrapped within the first layer.

15. A method of producing a polymer porous film comprises the following (a) to (c):

(a) preparing a polymer solution by mixing a polymer material, a good solvent, and a poor solvent;
(b) forming a liquid film of the polymer solution; and
(c) drying the liquid film to produce a polymer porous film.

The poor solvent has a boiling point that is higher than a boiling point of the good solvent.

A polymer porous film includes a first layer and a second layer. The first layer is porous. The first layer has a three-dimensional network structure. The second layer is non-porous in an image at a magnification of 50,000x. The proportion of the thickness of the second layer is more than 0% and less than 10%. The proportion of the thickness of the second layer is calculated by the above expression (I).

The porous film may be formed by drying-induced phase separation. For example, the proportion of the second layer may be adjusted by changing "the types of the polymer material, the good solvent, and the poor solvent", "the combination of the materials", "the blending ratio of the materials", "the drying conditions", and the like, or any combination thereof.

Next, an embodiment of the present disclosure (which may also be simply called "the present embodiment" hereinafter) and an example of the present disclosure (which may also be simply called "the present example" hereinafter) will be described. It should be noted that neither the present embodiment nor the present example limits the technical scope of the present disclosure.

The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is an example of a cross-sectional SEM image of a polymer porous film according to the present embodiment.
Fig. 2 is a schematic cross-sectional view of a polymer porous film according to the present embodiment.
Fig. 3 is a schematic flowchart for a method of producing a polymer porous film according to the present embodiment.
Fig. 4 is a schematic cross-sectional view of a configuration of a first battery according to the present embodiment.
Fig. 5 is a schematic cross-sectional view of a configuration of a second battery according to the present embodiment.
Fig. 6 gives SEM images of cross sections and surfaces for Nos. 1 to 5.
Fig. 7 gives SEM images of cross sections and surfaces for Nos. 6 to 8.
Fig. 8 is a graph for results of measurement of direct current internal resistance.
Fig. 9 is a graph for results of initial charging and discharging.
Fig. 10 gives SEM images of cross sections for Nos. 9 to 11.

DESCRIPTION OF THE PREFERRED EMBODIMENTS

<Definitions of Terms, etc.>

Expressions such as "comprise", "include", and "have", and other similar expressions (such as "be composed of", for example) are open-ended expressions. In an open-ended expression, in addition to an essential component, an additional component may or may not be further included. The expression "consist of" is a closed-end expression. However, even when a closed-end expression is used, impurities present under ordinary circumstances as well as an additional element irrelevant to the technique according to the present disclosure are not excluded. The expression "consist essentially of" is a semiclosed-end expression. A semiclosed-end expression tolerates addition of an element that does not substantially affect the fundamental, novel features of the technique according to the present disclosure.

Expressions such as "may" and "can" are not intended to mean "must" (obligation) but rather mean "there is a possibility" (tolerance).

A singular form also includes its plural meaning, unless otherwise specified. For example, "a particle" may mean not only "one particle" but also "a group of particles (powder, particles)".

As for a plurality of steps, operations, processes, and the like that are included in various methods, the order for implementing those things is not limited to the described order, unless otherwise specified. For example, a plurality of steps may proceed simultaneously. For example, a plurality of steps may be implemented in reverse order.

A numerical range such as "from m to n%" includes both the upper limit and the lower limit, unless otherwise specified. That is, "from m to n%" means a numerical range of "not less than m% and not more than n%". Moreover, "not less than m% and not more than n%" includes "more than m% and less than n%". "More than m%" is also expressed as "greater than m%". Further, any numerical value selected from a certain numerical range may be used as a new upper limit or a new lower limit. For example, any numerical value from a certain numerical range may be combined with any numerical value described in another location of the present specification or in a table or a drawing to set a new numerical range.

All the numerical values are regarded as being modified by the term "about". The term "about" may mean $\pm 5\%$, $\pm 3\%$, $\pm 1\%$, and/or the like, for example. Each numerical value may be an approximate value that can vary depending on the implementation configuration of the technique according to the present disclosure. Each numerical value may be expressed in significant figures. Each measured value may be the average value obtained from multiple measurements performed. The number of measurements may be 3 or more, or may be 5 or more, or may be 10 or more. Generally, the greater the number of measurements is, the more reliable the average value is expected to be. Each measured value may be rounded off based on the number of the significant figures. Each measured value may include an error occurring due to an identification limit of the measurement apparatus, for example.

When a compound is represented by a stoichiometric composition formula (such as "$LiCoO_2$", for example), this stoichiometric composition formula is merely a typical example of the compound. The compound may have a non-stoichiometric composition. For example, when lithium cobalt oxide is represented as "$LiCoO_2$", the composition ratio of lithium cobalt oxide is not limited to "Li/Co/O = 1/1/2" but Li, Co, and O may be included in any composition ratio, unless otherwise specified. Further, doping with a trace element and/or substitution may also be tolerated.

Any geometric term (such as "parallel", "vertical", and "perpendicular", for example) should not be interpreted solely in its exact meaning. For example, "parallel" may mean a geometric state that is deviated, to some extent, from exact "parallel". Any geometric term herein may include tolerances and/or errors in terms of design, operation, production, and/or the like. The dimensional relationship in each figure may not necessarily coincide with the actual dimensional relationship. The dimensional relationship (in length, width, thickness, and the like) in each figure may have been changed for the purpose of assisting the understanding of the technique according to the present disclosure. Further, a part of a configuration may have been omitted.

"A thickness of a porous film" may be measured with a constant-pressure thickness-measuring instrument. For example, "PG-01" (trade name) manufactured by TECLOCK (or a similar product) may be used. The force for measurement is 0.8 N.

The structure of a porous film may be identified by the procedure described below. From the porous film, a sample of a predetermined size is cut out. To reduce the electric charge of the sample, the sample is coated with platinum (Pt). The sample is placed in liquid nitrogen. The sample is sufficiently cooled. After cooling, the sample is cleaved. The cleaved cross section of the sample is examined with a field emission scanning electron microscope (FE-SEM). For example, "JSM-7100F" (trade name) manufactured by JEOL (or a similar product) may be used.

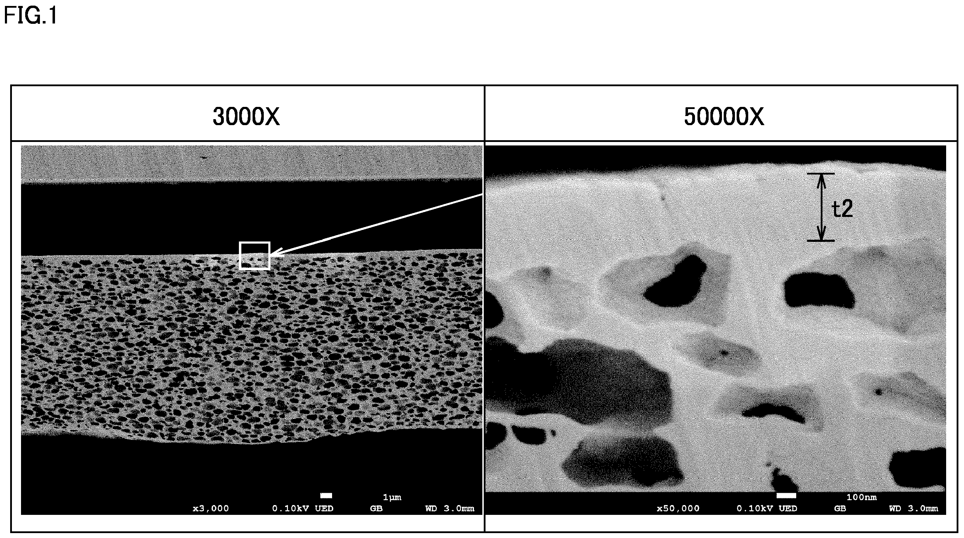

Fig. 1 is an example of a cross-sectional SEM image of a polymer porous film according to the present embodiment. The surface layer of the porous film is examined at a magnification of 50,000x. Ten positions are randomly selected in the image, and when those positions have no observable pore that opens in the surface of the porous film, it is considered that there is a second layer that "is non-porous in an image at a magnification of 50,000x". It should be noted that, because ions actually permeate through the second layer, there is a possibility that nano-scale pores can be present in the second layer that cannot be observed at 50,000x. For example, there is a possibility that pores with a maximum Feret diameter of 100 nm or less can be present.

The thickness of the second layer (t2) is measured. The thickness of the porous film (t0) is measured with the above-described constant-pressure thickness-measuring instrument. By the above expression (I), the proportion of the second layer is calculated.

"Average pore size" is calculated by the procedure described below. A cross-sectional SEM image of the first layer is prepared. The magnification of the image may be from 2,000 to 5,000x, for example. The first layer in the cross-sectional SEM image is examined. The maximum Feret diameters of one hundred pores (foam-like pores) are measured. The arithmetic mean of these hundred maximum Feret diameters is regarded as the average pore size.

"Air permeability" refers to "air resistance" defined by "JIS P8117". The air permeability may be measured with a Gurley test instrument. For example, a Gurley type densometer manufactured by Toyo Seiki Seisaku-sho (or a similar product) may be used.

"Porosity" is measured by the procedure described below. From the porous film, a sample of a predetermined size is cut out. For example, a hole punch and/or the like may be used. The mass and the thickness of the sample are measured. From the area and the thickness of the sample, the volume of the sample is calculated. From the mass and the volume of the sample, an apparent density is calculated. By the following expression (II), the porosity is calculated.

$$\text{Porosity (\%)} = \{1 - \rho/\rho_0\} \times 100 \qquad \text{(II)}$$

"$\rho$" represents the apparent density of the sample.

"$\rho_0$" represents the true density of the polymer material (a constituent material of the sample).

To identify whether a certain liquid material is "a good solvent" or "a poor solvent" for the polymer material, the following criteria may be used. When 2.5 parts by mass or more of the polymer material can dissolve in 100 parts by mass of the liquid material, the liquid material is regarded as a good solvent. When any more than 1 part by mass of the polymer material does not dissolve in 100 parts by mass of the liquid material, the liquid material is regarded as a poor solvent.

An electric current hour rate is represented by symbol "C". At a current of "1 C", the rated capacity of a battery is discharged in 1 hour. "CC (Constant Current)" mentioned in the context of charge/discharge conditions refers to a constant-current mode and "CCCV (Constant Current-Constant Voltage)" refers to a constant current-constant voltage mode.

"Electrode" collectively refers to a positive electrode and a negative electrode. The electrode may be either a positive electrode or a negative electrode.

"Average degree of polymerization" may be measured by a commonly-employed method. For example, NMR (Nuclear magnetic resonance) may be employed to measure the average degree of polymerization of the polymer material.

"Water-insoluble polymer" refers to a polymer that has a solubility of less than 1% in mass fraction in water at 25°C. The solubility of a water-insoluble polymer may be 0.5% or less, or may be 0.2% or less, or may be 0.1% or less. "Water-soluble polymer" refers to a polymer that has a solubility of 1% or more in mass fraction in water at 25°C.

<Polymer Porous Film>

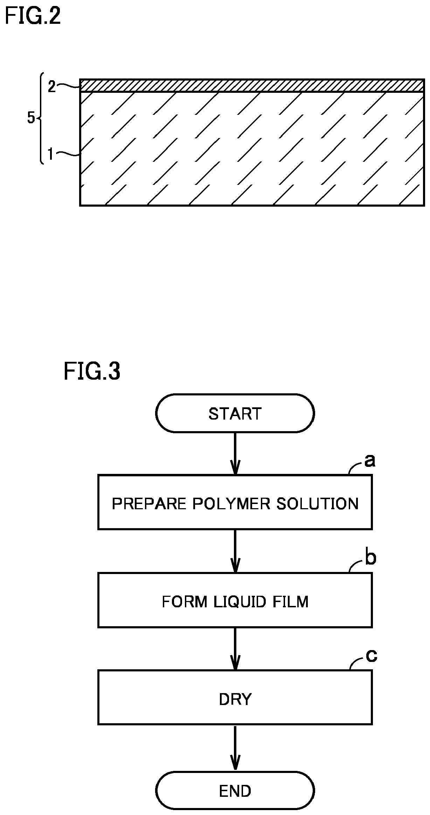

Fig. 2 is a schematic cross-sectional view of a polymer porous film according to the present embodiment. A porous film 5 includes a first layer 1 and a second layer 2. Porous film 5 may be used for any purpose of use. Porous film 5 may have film properties that are preferable for particular applications, for example. For example, film properties preferable for a separator (to be described below) may be different from those for an electrode framework (to be described below).

«Film Thickness»

For example, porous film 5 may have a thickness from 1 to 100 $\mu$m, or may have a thickness from 5 to 50 $\mu$m, or may have a thickness from 10 to 30 $\mu$m, or may have a thickness from 16 to 25 $\mu$m.

«Air Permeability»

For example, porous film 5 may have an air permeability from 10 to 1000 s/100ml, or may have an air permeability from 32 to 600 s/100ml, or may have an air permeability from 125 to 385 s/100ml, or may have an air permeability from 125 to 300 s/100ml.

<<Porosity>>

For example, porous film 5 may have a porosity from 10 to 90%, or may have a porosity from 40 to 80%, or may have a porosity from 50 to 80%, or may have a porosity from 50 to 72%, or may have a porosity from 64 to 72%.

<<Composition>>

The polymer material that constitutes porous film 5 is not particularly limited. For example, the polymer material may be insoluble in water or may be soluble in water. The polymer material may be electrically insulating. For example, the polymer material may be ionically nonconductive. For example, the polymer material may not swell. For example, the polymer material may include at least one selected from the group consisting of EVOH, PVDF, and PVA.

<<First Layer>>

First layer 1 is a base layer of porous film 5. Porous film 5 may include second layer 2 in a thickness ratio of more than 0% and less than 10%, with the remainder being made up of first layer 1. First layer 1 is porous. First layer 1 has a three-dimensional network structure. For example, the three-dimensional network structure may be formed by partial overlapping of foam-like pores. That is, the three-dimensional network structure may include a continuous pore structure. For example, the average pore size in first layer 1 may be from 100 to 5000 nm, or may be from 500 to 2000 nm, or may be from 500 to 1000 nm.

<<Second Layer>>

Second layer 2 is a surface layer of porous film 5. Second layer 2 is formed as one of the main faces of porous film 5. Second layer 2 is on top of first layer 1. Second layer 2 is non-porous when observed at a magnification of 50,000x. Second layer 2 has ion permeability. Second layer 2 may be capable of inhibiting dendrite growth.

The proportion of second layer 2 is more than 0% and less than 10%. For example, the proportion of second layer 2 may be from 2 to 8 %, or may be from 2 to 7 %, or may be from 2 to 6 %, or may be from 2 to 5%. For example, the proportion of second layer 2 may be from 4 to 8 %, or may be from 5 to 8 %, or may be from 6 to 8 %, or may be from 7 to 8%.

For example, second layer 2 may have a thickness from 0.1 to 2 $\mu$m, or may have a thickness from 0.5 to 1.5 $\mu$m, or may have a thickness from 0.5 to 1.0 $\mu$m, or may have a thickness from 1.0 to 1.5 $\mu$m.

<Method of Producing Polymer Porous Film>

Fig. 3 is a schematic flowchart for a method of producing a polymer porous film according to the present embodiment. Hereinafter, "the method of producing a polymer porous film according to the present embodiment" may also be simply called "the present production method". The present production method includes "(a) preparing a polymer solution", "(b) forming a liquid film", and "(c) drying".

<<(a) Preparing Polymer Solution>>

The present production method includes preparing a polymer solution by mixing a polymer material, a good solvent, and a poor solvent. For example, the polymer material may have an average degree of polymerization from 70 to 500000, or may have an average degree of polymerization from 100 to 200000.

The good solvent and the poor solvent are selected in accordance with the type of the polymer material. The poor solvent has a boiling point that is higher than a boiling point of the good solvent. For example, the boiling point of the poor solvent may be at least 10°C higher than the boiling point of the good solvent. For example, the boiling point of the poor solvent may be 90 to 300°C higher than the boiling point of the good solvent.

When the polymer material is EVOH, PVA, and/or the like, for example, the good solvent may include, for example, at least one selected from the group consisting of water, alcohol, and dimethyl sulfoxide (DMSO). The good solvent may include, for example, at least one selected from the group consisting of water, n-propyl alcohol (nPA), and iso-propyl alcohol (iPA). The poor solvent may include, for example, at least one selected from the group consisting of cyclic esters, alcohols, diols, and ethers. The poor solvent may include, for example, at least one selected from the group consisting of γ-butyrolactone (GBL), hexylene glycol (HG), and diethylene glycol monomethyl ether (DEGEE).

When the polymer material is PVDF and/or the like, for example, the good solvent may include, for example, at least one selected from the group consisting of N-methyl-2-pyrrolidone (NMP), N,N-dimethylformamide (DMF), and DMSO. The poor solvent may include, for example, at least one selected from the group consisting of alcohols and ethers. The poor solvent may include, for example, at least one selected from the group consisting of 1,4-butanediol and glycerol.

The polymer material, the good solvent, and the poor solvent are mixed in a predetermined formulation ratio. For example, the amount of the good solvent to be used may be from 2 to 10 parts by mass, or may be from 4 to 8 parts by mass, or may be from 5 to 6.6 parts by mass, relative to 1 part by mass of the polymer material. For example, the amount of the poor solvent to be used may be from 1 to 5 parts by mass, or may be from 1 to 3 parts by mass, or may be from 1.5 to 2.3 parts by mass, or may be from 1.5 to 2.0 parts by mass, relative to 1 part by mass of the polymer material.

The polymer material, the good solvent, and the poor solvent are mixed in such a manner that the polymer material is completely dissolved. In order to facilitate the dissolution of the polymer material, the polymer solution may be heated, for example. The heating temperature may be from 80 to 90°C, for example. After the polymer material is dissolved, the polymer solution may be cooled to room temperature (25°C). The polymer solution may form a uniform phase.

<<(b) Forming Liquid Film>>

The present production method includes forming a liquid film of the polymer solution. For example, the liquid film may be formed by application of the polymer solution to a surface of a substrate. The method of application is not particularly limited. For example, application of the polymer solution may be carried out by casting, spin coating, and/or the like. For example, the thickness of the liquid film may be changed so as to adjust the thickness of the polymer porous film. For example, the substrate may be a metal foil and/or the like. For example, the substrate may be an electrode for a battery.

<<(c) Drying>>

The present production method includes drying the liquid film to produce a polymer porous film. The method for drying is not particularly limited. For example, the liquid film may be dried on a hot plate. For example, the drying temperature may be from 80 to 150°C. When the liquid film is dried, porous film 5 may be formed. It is expected that a three-dimensional network structure is formed by the mechanism described below, for example.

In the process of drying, the good solvent may vaporize before the poor solvent does. This is because the boiling point of the poor solvent is higher than the boiling point of the good solvent. Due to the decrease of the good solvent, the concentration of the poor solvent in the polymer solution relatively increases. Because the polymer material selectively dissolves in the good solvent, phase separation is facilitated between a phase that consists of both the polymer material and the good solvent and another phase that consists of the poor solvent. This separation may be spinodal decomposition. As a result of this phase separation, the polymer material forms the scaffold of a three-dimensional network structure. In the early stages of drying, solvent enriched with the good solvent vaporizes. As the drying proceeds, the ratio of the poor solvent increases. In the later stages of drying, solvent enriched with the poor solvent vaporizes. As the solvent decreases, the polymer material deposits. As the poor solvent further vaporizes, pores are formed.

Porous film 5 is formed in such a manner that it includes first layer 1 and second layer 2. In the present production method, various conditions are adjusted so as to achieve the proportion of second layer 2 to be more than 0% and less than 10%. For example, the proportion of second layer 2 may be adjusted by changing "the types of the polymer material, the good solvent, and the poor solvent", "the combination of the materials", "the blending ratio of the materials", "the drying conditions", and the like, or any combination thereof.

After porous film 5 is formed, the substrate may be removed. For example, when the substrate is a metal foil, the metal foil may be removed with the use of an etchant liquid. As a result of the removal of the substrate, porous film 5 (a self-standing film) may be formed. For example, porous film 5 may be formed on a surface of an electrode to produce an electrode unit.

<First Battery>

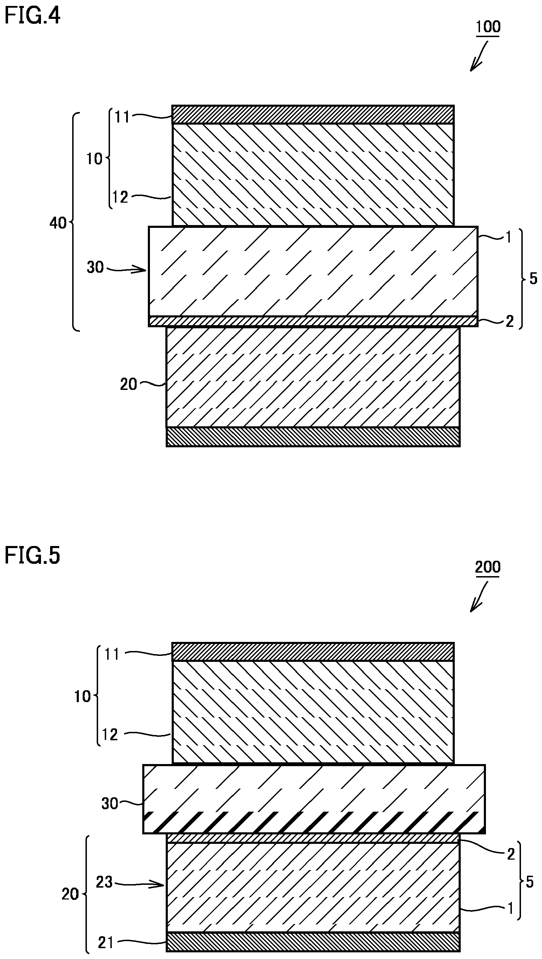

For example, porous film 5 may be used as a separator. Fig. 4 is a schematic cross-sectional view of a configuration of a first battery according to the present embodiment. For example, a first battery 100 may be a lithium-ion secondary battery and/or the like. First battery 100 may include a hermetically-sealed vessel (not illustrated). The hermetically-sealed vessel may accommodate a first electrode 10, a separator 30, a second electrode 20, and an electrolyte solution (not illustrated). Second electrode 20 has a polarity that is different from a polarity of first electrode 10. For example, when first electrode 10 is a positive electrode, second electrode 20 is a negative electrode. First electrode 10 may be a negative electrode or may be a positive electrode. Each electrode includes an active material. For example, each electrode may include an insertion material. For example, the positive electrode may include lithium nickel cobalt manganese oxide (NCM) and/or the like. For example, the negative electrode may include natural graphite (NG) and/or the like. For example, each electrode may further include a conductive material. For example, each electrode may include acetylene black (AB) and/or the like. For example, each electrode may further include a binder. For example, each electrode may include PVDF, carboxymethylcellulose (CMC), styrene-butadiene rubber (SBR), and/or the like.

For example, the electrolyte solution includes a lithium (Li) salt and a solvent. For example, the Li salt may include $LiPF_6$ and/or the like. For example, the concentration of the Li salt may be from 0.5 to 2 mol/L. For example, the solvent may include at least one selected from the group consisting of ethylene carbonate (EC), propylene carbonate (PC), butylene carbonate (BC), ethyl methyl carbonate (EMC), dimethyl carbonate (DMC), and diethyl carbonate (DEC).

<<Separator for Battery>>

At least part of separator 30 is interposed between first electrode 10 and second electrode 20. Separator 30 separates second electrode 20 from first electrode 10.

Separator 30 includes porous film 5. Separator 30 may consist of a single porous film 5. Separator 30 may include a plurality of porous films 5. For example, a plurality of porous films 5 may be stacked together to form separator 30. For example, a plurality of porous films 5 may be sequentially stacked in such a manner that first layer 1 comes on top of second layer 2. For example, two porous films 5 may be stacked in such a manner that their second layers 2 come into contact with each other. In this case, second layers 2 are to be positioned near the center of separator 30.

In addition to porous film 5, separator 30 may further include an additional configuration. For example, a heat-resistant layer (not illustrated) may be formed on a surface of porous film 5. For example, the heat-resistant layer may be formed by application of ceramic particles to a surface of porous film 5.

Porous film 5 includes first layer 1 (a porous layer) and second layer 2 (a non-porous layer). The presence of second layer 2 between the positive electrode and the negative electrode is expected to enhance short circuit resistance. It may be because second layer 2 inhibits dendrite growth from the negative electrode toward the positive electrode. When the proportion of second layer 2 is less than 10%, a desired degree of battery resistance may be achieved. Second layer 2 may face the positive electrode, or may face the negative electrode.

<<Electrode Unit>>

Separator 30 (porous film 5) may be adhered to a surface of first electrode 10. Separator 30 and first electrode 10 are made into a single-piece member to form an electrode unit 40. That is, electrode unit 40 includes porous film 5 and first electrode 10. It would be natural that first electrode 10 may be either a positive electrode or a negative electrode. For example, electrode unit 40 may be produced by forming porous film 5 on a surface of first electrode 10 which serves as a substrate. This single-piece configuration of separator 30 and the electrode is expected to achieve a decreased number of parts, simplified battery assembly, and/or the like, for example.

For example, first electrode 10 may include a first current collector 11 and a first active material layer 12. For example, first current collector 11 may include a metal foil and/or the like. For example, first current collector 11 may include an aluminum (Al) foil and/or the like. First active material layer 12 includes an active material. The active material may be particles. For example, first active material layer 12 may further include a conductive material, a binder, and/or the like. For example, porous film 5 may be adhered to a surface of first active material layer 12.

<Second Battery>

For example, porous film 5 may be used as an electrode framework. Fig. 5 is a schematic cross-sectional view of a configuration of a second battery according to the present embodiment. A second battery 200 is of the dissolution-deposition type. For example, second battery 200 may be a lithium metal secondary battery and/or the like. Second battery 200 may include a hermetically-sealed vessel (not illustrated). The hermetically-sealed vessel may accommodate first electrode 10, second electrode 20, and an electrolyte solution (not illustrated). Between first electrode 10 and second electrode 20, separator 30 may be interposed. For example, separator 30 may include a polyolefin porous film, a nonwoven fabric, and/or the like. For example, separator 30 may be produced by stretching.

Second electrode 20 has a polarity that is different from a polarity of first electrode 10. For example, second electrode 20 may be a negative electrode. Second electrode 20 includes an electrode framework 23. Second electrode 20 may further include a second current collector 21. For example, second current collector 21 may include a copper (Cu) foil and/or the like. Electrode framework 23 may be supported by second current collector 21. Electrode framework 23 may be adhered to a surface of second current collector 21.

Second electrode 20 includes an active material of the dissolution-deposition type. For example, the active material may include at least one selected from the group consisting of Li metal, magnesium (Mg) metal, calcium (Ca) metal, and Al metal.

Electrode framework 23 includes porous film 5. Porous film 5 includes first layer 1 (a porous layer) and second layer 2 (a non-porous layer). While second electrode 20 is being charged, a metal (an active material) may deposit inside a space in first layer 1. While second electrode 20 is being discharged, the metal may be dissolved in the electrolyte solution inside the space in first layer 1. While it is depositing, the active material (a metal) of the dissolution-deposition type tends to form dendrites. When the metal deposits inside the space (foam-like pores) in first layer 1, the metal is expected to deposit in the form of lumps.

Usually, an electrode of the dissolution-deposition type changes its volume to a great extent during charge and discharge (dissolution and deposition of the metal). When dissolution and deposition of the metal occurs in first layer 1 (a three-dimensional network structure), the volume change of second electrode 20 is expected to be reduced.

Further, when porous film 5 includes second layer 2 (a non-porous layer), the metal is expected to be entrapped in first layer 1. When the metal is entrapped in first layer 1, an enhanced cycle life and/or the like is expected to be achieved, for example.

[Examples]

<Experiment 1>

In Experiment 1, porous films according to Nos. 1 to 8 were produced with the use of a water-insoluble polymer as a raw material. For example, "the porous film according to No. 1" may also be simply called "No. 1" hereinafter.

<<Producing Porous Film>>

No. 1

The below materials were prepared.

Polymer material: EVOH ("Eval L171B" (trade name) manufactured by KURARAY)
Good solvent: water, nPA, iPA
Poor solvent: GBL, HG
Substrate: Cu foil

To a sample vial, 1 part by mass of EVOH, 3.3 parts by mass of water, 3.3 parts by mass of iPA, and 2.0 parts by mass of HG were added. The sample vial was heated to 80 to 90°C. The mixture was stirred at a speed of revolution of 350 rpm until complete dissolution of EVOH was confirmed by visual examination. Thus, a polymer solution was obtained. Further, the polymer solution was cooled to 25°C.

After cooling, the polymer solution was applied to a surface of the substrate by casting. Thus, a liquid film was formed. The resulting substrate with the liquid film was placed in a hot plate dryer (the temperature was set at 100°C). The liquid film was dried for 20 minutes. The good solvent and the poor solvent vaporized, and thereby a porous film was formed on the surface of the substrate. An etchant liquid was used to separate the porous film from the substrate.

Nos. 2 to 8

Porous films were produced in the same manner as in No. 1 except that the type and the amount of the good solvent, the type and the amount of the poor solvent, and the drying temperature were changed as specified in Table 1 below. It is made clear that changing various conditions causes a change in the proportion of the second layer.

«Evaluation»

Film properties

By the methods as described above, "Thickness of porous film", "Porosity", "Air permeability", and "Average pore size" were measured. Results are given in Table 1 below. As for "Air permeability", ">600" means that the value is more than 600 and "10<" means that the value is less than 10.

Proportion of Second Layer

By the methods as described above, "Thickness of second layer" and "Proportion of second layer" were measured. Results are given in Table 1 below.

Battery properties

In a test battery (a coin cell), direct current internal resistance was measured. The test battery had the configuration as described below.

Positive electrode

Shape: disk-like (diameter, 14 mm)
Composition of active material layer: NCM/AB/PVDF = 88.8/9.4/1.8 (mass ratio)
Current collector: Al foil
Separator
Shape: disk-like (diameter, 19 mm)
Composition: porous films according to Nos. 1 to 8
Orientation: The porous film was interposed between the positive electrode and the negative electrode in such a manner that the second layer faced the negative electrode.
Negative electrode
Shape: disk-like (diameter, 16 mm)
Composition: NG/SBR/CMC = 98.8/0.7/0.5 (mass ratio)
Current collector: Cu foil
Electrolyte solution
Li salt: $LiPF_6$ (concentration, 1.1 mol/L)
Solvent: EC/DMC/EMC = 3/4/3 (volume ratio)
Internal resistance of the test battery was measured under the conditions as described below. 1 C corresponds to 1.5 mA.
Initial charging and discharging
Ambient temperature: 25°C
CCCV charging: 0.2 C, 4.1 V
CC discharging: 0.2 C, 3.0 V
Measurement of resistance

After initial charging and discharging, charge and discharge was carried out again under the following conditions.

Ambient temperature: 25°C
CCCV charging: 0.2 C, 4.1 V
CC discharging: 0.2 C, 3.0 V

From the difference between the voltage at the start of discharging and the voltage after a lapse of 10 seconds from the start of discharging, direct current internal resistance was calculated. The portion of the direct current internal resistance from 0 to 0.1 seconds was regarded as "(direct current resistance) + (reaction resistance)". The portion of the direct current internal resistance from 0.1 to 10 seconds was regarded as "diffusive resistance".

Table 1

| No. | Production method | | | | | | | Porous film | | | | Second layer | |
| | Polymer material | | Good solvent | | Poor solvent | | Drying temper-ature [°C] | Thickness [μm] | Porosity [%] | Air permeability [s/100m1] | Average pore size [nm] | | |
| | Type | Amount [parts by mass] | Type | Amount [parts by mass] | Type | Amount [parts by mass] | | | | | | Thickness [μm] | Proportion [%] |
|---|---|---|---|---|---|---|---|---|---|---|---|---|---|
| 1 | EVOH | 1 | Water/iPA | 3.3/3.3 | HG | 2.0 | 100 | 21 | 65 | 125 | 500 | 0.5 | 2 |
| 2 | EVOH | 1 | Water/iPA | 2.5/2.5 | HG | 2.3 | 100 | 22 | 67 | 300 | 500 | 1.0 | 5 |
| 3 | EVOH | 1 | Water/iPA | 2.5/2.5 | HG | 1.5 | 100 | 21 | 69 | >600 | 500 | 1.5 | 7 |
| 4 | EVOH | 1 | Water/nPA | 2.5/2.5 | GBL | 3.0 | 120 | 18 | 72 | 385 | 2000 | 1.5 | 8 |
| 5 | EVOH | 1 | Water/nPA | 2.5/2.5 | GBL | 3.0 | 100 | 16 | 70 | 32 | 2000 | 1.0 | 6 |
| 6 | EVOH | 1 | Water/nPA | 2.5/2.5 | GBL | 1.5 | 120 | 20 | 56 | >600 | 2000 | 2.0 | 10 |
| 7 | EVOH | 1 | Water/iPA | 3.3/3.3 | HG | 4.0 | 100 | 27 | 74 | 10< | 500 | 0 | 0 |
| 8 | EVOH | 1 | Water/iPA | 2.5/2.5 | HG | 3.0 | 100 | 20 | 75 | 10< | 2000 | 0 | 0 |

«Results»

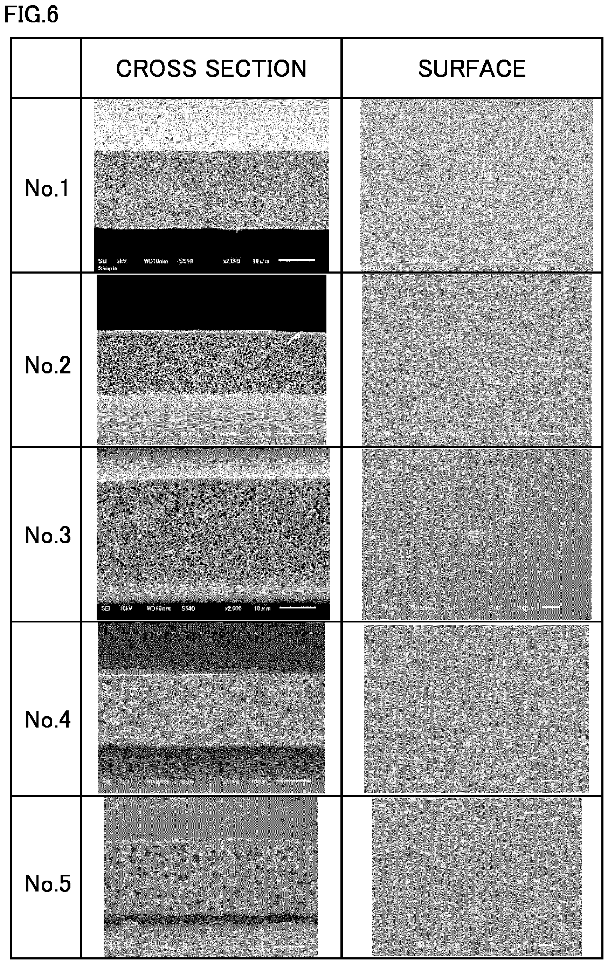

Fig. 6 gives SEM images of cross sections and surfaces for Nos. 1 to 5. In Nos. 1 to 5, a thin second layer (a non-porous layer) was formed as the outermost surface of the porous film.

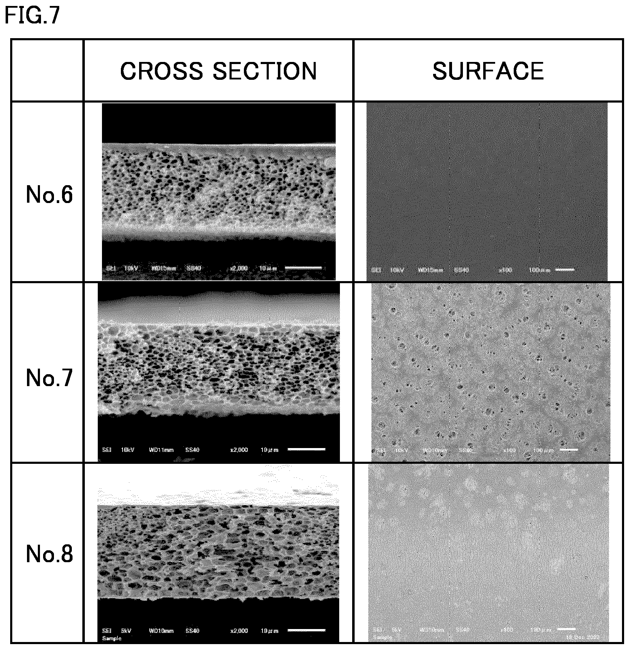

Fig. 7 gives SEM images of cross sections and surfaces for Nos. 6 to 8. In No. 6, a thick second layer (a non-porous layer) was formed as the outermost surface of the porous film. In Nos. 7 and 8, pores were observed in the surface of the porous film. That is, in Nos. 7 and 8, a second layer (a non-porous layer) was not formed.

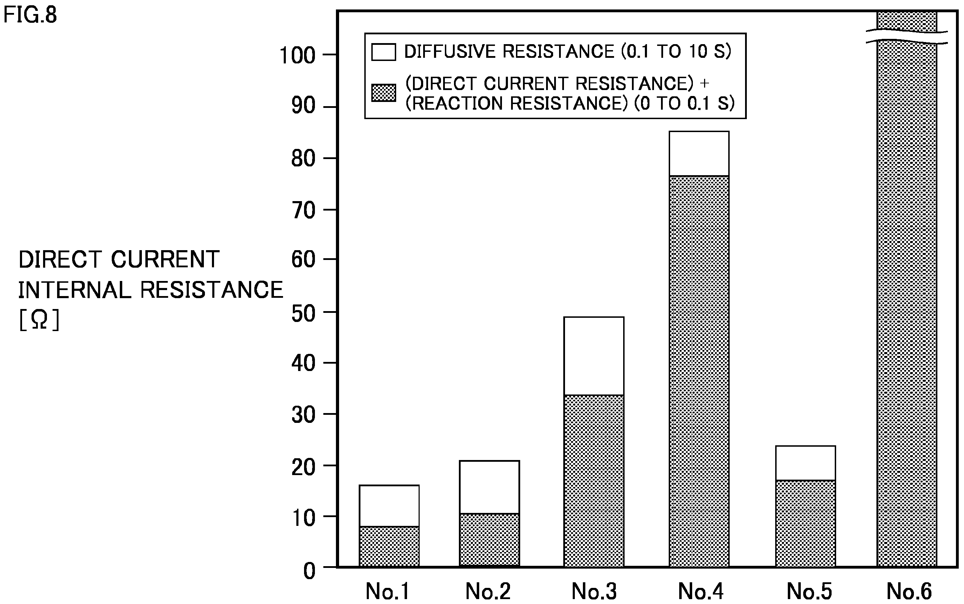

Fig. 8 is a graph for results of measurement of direct current internal resistance. In No. 6, direct current internal resistance was very high. In No. 6, the proportion of the second layer was 10% or more (see Table 1 above). In Nos. 1 to 5, a desired degree of direct current internal resistance was exhibited. In Nos. 1 to 5, the proportion of the second layer was less than 10% (see Table 1 above). As for Nos. 7 and 8, direct current internal resistance was not measured because a short circuit occurred during initial charging.

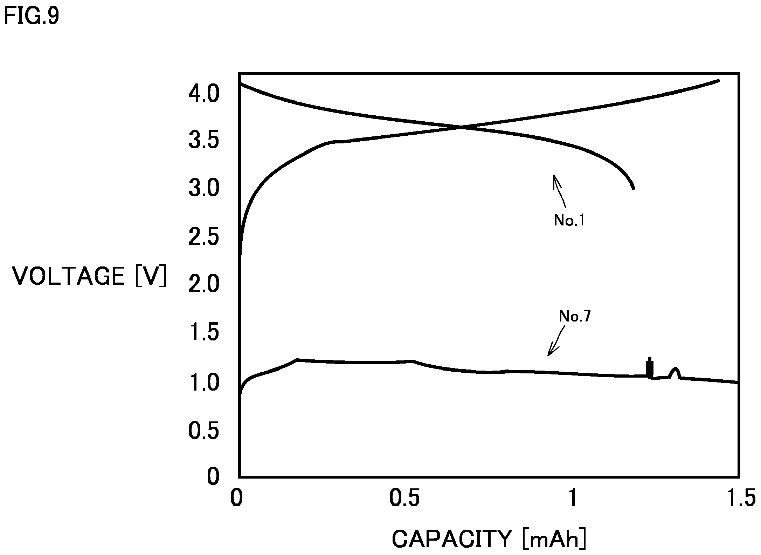

Fig. 9 is a graph for results of initial charging and discharging. In No. 7, a short circuit occurred during charging. In No. 7, the proportion of the second layer was 0% (see Table 1 above). No. 1 was chargeable and dischargeable. In No. 1, the proportion of the second layer was more than 0% (see Table 1 above).

<Experiment 2>

In Experiment 2, porous films according to Nos. 9 to 11 were produced with the use of a water-soluble polymer as a raw material.

<<Producing Porous Film>>

No. 9

The below materials were prepared.

Polymer material: PVA ("Poval PVA117" (trade name) manufactured by KURARAY)
Good solvent: water
Poor solvent: DEGEE
Substrate: Cu foil

To a sample vial, 1.5 parts by mass of PVA, 10 parts by mass of water, and 6 parts by mass of DEGEE were added. The sample vial was heated to 80 to 90°C. The mixture was stirred at a speed of revolution of 350 rpm until complete dissolution of PVA was confirmed by visual examination. Thus, a polymer solution was obtained. Further, the polymer solution was cooled to 25°C.

After cooling, the polymer solution was applied to a surface of the substrate by casting. Thus, a liquid film was formed. The resulting substrate with the liquid film was placed in a hot plate dryer (the temperature was set at 140°C). The liquid film was dried for 20 minutes. The good solvent and the poor solvent vaporized, and thereby a porous film was formed on the surface of the substrate. An etchant liquid was used to separate the porous film from the substrate.

Nos. 10 and 11

Porous films were produced in the same manner as in No. 9 except that the amount of the poor solvent and the drying temperature were changed as specified in Table 2 below. It is made clear that changing various conditions causes a change in the proportion of the second layer.

«Evaluation»

By the methods as described above, "Thickness of porous film", "Porosity", and "Proportion of second layer" were measured. Results are shown in Table 2 below.

Table 2

| No. | Production method | | | | | | | Porous film | | | | Second layer | |
|---|---|---|---|---|---|---|---|---|---|---|---|---|---|
| | Polymer material | | Good solvent | | Poor solvent | | Drying temperature [°C] | Thickness [µm] | Porosity [%] | Air permeability [s/100m1] | Average pore size [nm] | Thickness [µm] | Proportion [%] |
| | Type | Amount [parts by mass] | Type | Amount [parts by mass] | Type | Amount [parts by mass] | | | | | | | |
| 9 | PVA | 1.5 | Water | 10 | DEGEE | 6.0 | 140 | 20 | 64 | | | 1.5 | 7.5 |
| 10 | PVA | 1.5 | Water | 10 | DEGEE | 3.0 | 140 | 23 | 50 | | | 1.5 | 6.5 |
| 11 | PVA | 1.5 | Water | 10 | DEGEE | 3.0 | 100 | 25 | 52 | | | 1.0 | 4.0 |

«Results»

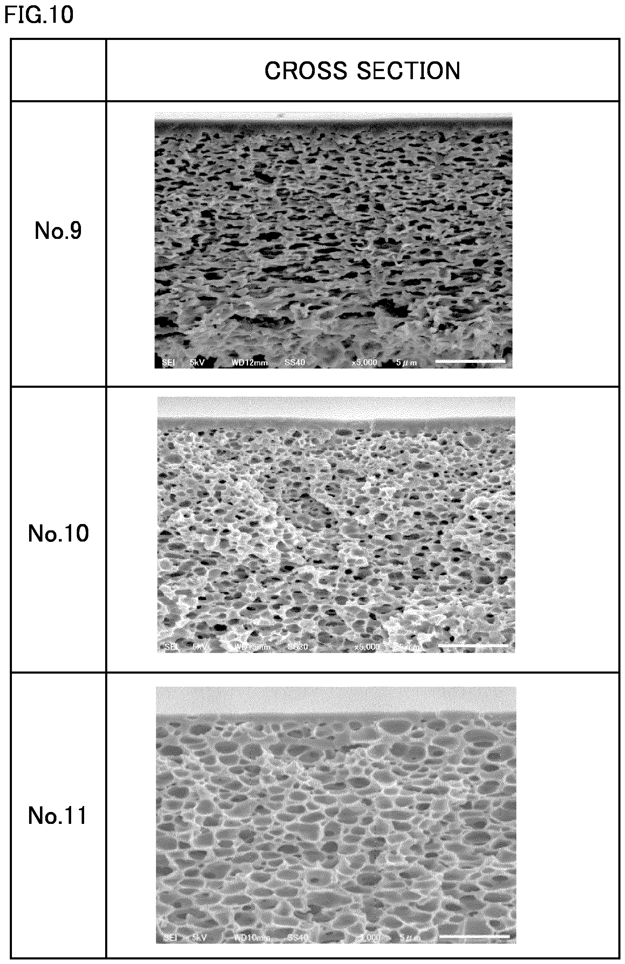

Fig. 10 gives SEM images of cross sections for Nos. 9 to 11. It is made clear that it is possible to produce a porous film including a first layer and a second layer, even by using a water-soluble polymer as a raw material.

The present embodiment and the present example are illustrative in any respect. The present embodiment and the present example are non-restrictive. The technical scope of the present disclosure encompasses any modifications within the meaning and the scope equivalent to the terms of the claims. For example, it is expected that certain configurations of the present embodiments and the present examples can be optionally combined.

## Claims

1.  A polymer porous film comprising:

    a first layer (1); and
    a second layer (2), wherein
    the first layer (1) is porous,
    the first layer (1) has a three-dimensional network structure,
    the second layer (2) is non-porous in an image at a magnification of 50,000x,
    a proportion of the second layer (2) is more than 0% and less than 10%, and
    the proportion of the second layer (2) is calculated by the following expression (I):

    $$\text{proportion (\%) of the second layer (2)} = (t_2/t_0) \times 100 \qquad \text{(I)}$$

    where $t_0$ represents a thickness of the polymer porous film (5), and $t_2$ represents a thickness of the second layer (2).

2.  The polymer porous film according to claim 1, wherein the proportion of the second layer (2) is from 2 to 8%.

3.  The polymer porous film according to claim 1 or 2, wherein the thickness of the second layer (2) is from 0.5 to 1.5 $\mu$m.

4.  The polymer porous film according to any one of claims 1 to 3, wherein the first layer (1) has an average pore size from 500 to 2000 nm.

5.  The polymer porous film according to any one of claims 1 to 4, wherein the three-dimensional network structure includes a continuous pore structure.

6.  The polymer porous film according to any one of claims 1 to 5, including at least one selected from the group consisting of ethylene-(vinyl alcohol) copolymer, polyvinylidene difluoride, and polyvinyl alcohol.

7.  The polymer porous film according to any one of claims 1 to 6, having an air permeability from 32 to 600 s/100ml.

8.  The polymer porous film according to any one of claims 1 to 7, having a porosity from 50 to 72%.

9.  The polymer porous film according to any one of claims 1 to 8, having a thickness from 16 to 25 $\mu$m.

10. A separator for a battery, comprising the polymer porous film (5) according to any one of claims 1 to 9.

11. An electrode unit comprising:

    the polymer porous film according to any one of claims 1 to 9; and
    an electrode, wherein
    the polymer porous film is adhered to a surface of the electrode.

12. An electrode framework comprising the polymer porous film according to any one of claims 1 to 9.

13. A battery comprising:

a first electrode;
a second electrode; and
an electrolyte solution, wherein
the second electrode has a polarity that is different from a polarity of the first electrode,
the second electrode includes the electrode framework according to claim 12, and
the second electrode is charged by deposition reaction of a metal inside a space in the first layer, and discharged by dissolution reaction of the metal inside the space in the first layer.

**14.** A method of producing a polymer porous film, the method comprising:

(a) preparing a polymer solution by mixing a polymer material, a good solvent, and a poor solvent;
(b) forming a liquid film of the polymer solution; and
(c) drying the liquid film to produce a polymer porous film (5), wherein

the poor solvent has a boiling point that is higher than a boiling point of the good solvent,
the polymer porous film (5) includes a first layer (1) and a second layer (2),
the first layer (1) is porous,
the first layer (1) has a three-dimensional network structure,
the second layer (2) is non-porous in an image at a magnification of 50,000x,
a proportion of the second layer (2) is more than 0% and less than 10%, and
the proportion of the second layer (2) is calculated by the following expression (I):

$$\text{proportion (\%) of the second layer} = (t_2/t_0) \times 100 \qquad (I)$$

where $t_0$ represents a thickness of the polymer porous film (5), and $t_2$ represents a thickness of the second layer (2).

FIG.1

| 3000X | 50000X |
|---|---|

FIG.2

FIG.3

FIG.4

FIG.5

FIG.6

| | CROSS SECTION | SURFACE |
|---|---|---|
| No.1 | | |
| No.2 | | |
| No.3 | | |
| No.4 | | |
| No.5 | | |

FIG.7

| | CROSS SECTION | SURFACE |
|---|---|---|
| No.6 | | |
| No.7 | | |
| No.8 | | |

FIG.8

FIG.9

EP 4 228 075 A2

FIG.10

| | CROSS SECTION |
|---|---|
| No.9 | |
| No.10 | |
| No.11 | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022021026 A

- JP 2020123453 A